# EUROPEAN PATENT APPLICATION

(11) **EP 4 512 696 A1**
(43) Date of publication of application: **26.02.2025**
(21) Application number: 24195644.0
(22) Date of filing: 21.08.2024
(51) Int. Cl.: B62D 6/00

(54) **STEERING CONTROL DEVICE**

(30) Priority: 25.08.2023 JP 2023137095
(71) Applicant: JTEKT CORPORATION, Kariya-shi, Aichi-ken, 448-8652 (JP)
(72) Inventor: NAKAGAWA, Yuto, Kariya-shi, Aichi-ken,, 448-8652 (JP); TAMAIZUMI, Terutaka, Kariya-shi, Aichi-ken,, 448-8652 (JP); INDEN, Yuki, Kariya-shi, Aichi-ken,, 448-8652 (JP); TAKAHASHI, Saki, Toyota-shi, Aichi-ken,, 471-8571 (JP)
(74) Representative: Winter, Brandl - Partnerschaft mbB

(57) **Abstract**

The steering control device (50) includes a software processing device. The software processing device is configured to execute assist amount (Ta) setting processing, axial force (F) setting processing, and reaction force (Ts ) application processing. In the assist amount setting processing, an assist amount is set while an output value of first damping processing that outputs a first damping correction amount having a correlation with a steering angular velocity (θs) is used. In the axial force setting processing, the axial force is set while an output value of second damping processing that outputs a second damping correction amount having a positive correlation with the steering angular velocity is used. In the reaction force (Ts) application processing, a value obtained by subtracting the axial force (F) from the assist amount (Ta) is an input and a reaction force motor (22) is operated.

(Figure 2)

## Description

### BACKGROUND OF THE INVENTION

### 1. Field of the Invention

The present disclosure relates to a steering control device.

### 2. Description of Related Art

For example, Japanese Unexamined Patent Application Publication No. 2022-160308 (JP 2022-160308 A) discloses a steering control device mounted on a steer-by-wire system. The control device sets a steering force that is a force in a direction in which a driver steers a steering wheel and an axial force. The control device controls a torque of a motor that applies a reaction force to the steering wheel according to a value obtained by subtracting the axial force from the steering force.

### SUMMARY OF THE INVENTION

Incidentally, the inventor has found, in a situation in which the torque of the motor increases, a phenomenon in which a steering system is unstable, such as vibration of the steering wheel.

Hereinafter, means for solving the above problem and effects thereof will be described.

Configuration 1. An aspect of the present disclosure relates to a steering control device including a software processing device. The software processing device sets a steering system as a control target. The steering system includes a reaction force motor configured to apply a steering reaction force to a steering shaft, and a turning motor configured to cause turning wheels to turn in a state where power transmission from the steering shaft is cut off. The software processing device is configured to execute assist amount setting processing, axial force setting processing, and reaction force application processing. In the assist amount setting processing, an assist amount is set while an output value of first damping processing is used, in which the assist amount is an amount of assisting a driver in rotating the steering shaft. In the axial force setting processing, an axial force is set while an output value of second damping processing is used, in which the axial force is a force that resists a rotation operation of the steering shaft by the driver. In the reaction force application processing, a value obtained by subtracting the axial force from the assist amount is an input and the reaction force motor is operated. In the first damping processing, a first damping correction amount having a correlation with a steering angular velocity is output. In the second damping processing, a second damping correction amount having a positive correlation with the steering angular velocity is output.

In the above configuration, since the second damping processing is newly provided, the steering system can be suppressed to be unstable with the use of the second damping correction amount.

Configuration 2. In the steering control device according to the Configuration 1, the software processing device may be configured to execute second gain adjustment processing of adjusting, according to a value of a torque correlation variable, a second gain that is a gain of the second damping processing. The torque correlation variable may be a variable having a correlation with a torque of the reaction force motor.

A torque correlation coefficient has a positive correlation with the torque of the reaction force motor and a steering torque, which is a torque input by the driver to the steering shaft. A situation in which the steering system is unstable is likely to occur when an absolute value of the torque of the reaction force motor is large, when an absolute value of the steering torque is excessively large, or the like. Therefore, in the above configuration, with the understanding of the situation in which the steering system is unstable is likely to occur, the gain of the second damping processing can be adjusted according to the situation by the torque correlation coefficient. Therefore, an appropriate gain can be set in suppressing the steering system to be unstable.

Configuration 3. In the steering control device according to the Configuration 2, in the second gain adjustment processing, the second gain may be adjusted according to a vehicle speed in addition to the value of the torque correlation variable. In the above configuration, the second gain is set according to the vehicle speed. Accordingly, the second gain can be set more appropriately according to a situation in which the stability is likely to be reduced, as compared with a case where the second gain is set without referring to the vehicle speed.

Configuration 4. In the steering control device according to any one of the Configuration 1 to the Configuration 3, in the assist amount setting processing, the assist amount may be set while output values of a plurality of pieces of compensation processing including the first damping processing are used. The software processing device may be configured to execute compensation gain adjustment processing of adjusting, according to a value of a torque correlation variable, a compensation gain that is a gain of at least one of the plurality of pieces of compensation processing. The torque correlation variable may be a variable having a correlation with the torque of the reaction force motor.

The torque correlation coefficient has a positive correlation with the torque of the reaction force motor and the steering torque, which is the torque input by the driver to the steering shaft. The situation in which the steering system is unstable is likely to occur when the absolute value of the torque of the reaction force motor is large, when the absolute value of the steering torque is excessively large, or the like. Therefore, in the above configuration, with the understanding of the situation in which the steering system is unstable is likely to occur, the gain of the compensation processing can be adjusted according to the situation by the torque correlation coefficient. Therefore, the output of the compensation processing can be adjusted to an appropriate value according to a situation in which the stability is likely to be reduced.

Configuration 5. In the steering control device according to the Configuration 4, in the compensation gain adjustment processing, the compensation gain may be adjusted according to a vehicle speed in addition to the value of the torque correlation variable. In the above configuration, the compensation gain is set according to the vehicle speed. Accordingly, the compensation gain can be set more appropriately according to a situation in which the stability is likely to be reduced, as compared with a case where the compensation gain is set without referring to the vehicle speed.

Configuration 6. In the steering control device according to any one of the Configuration 2 to the Configuration 5, the torque correlation variable may be a steering torque.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a configuration of a steering system according to an embodiment of the present disclosure;
FIG. 2 is a block diagram showing processing executed by a control device shown in FIG. 1;
FIG. 3 is a block diagram showing the processing executed by the control device shown in FIG. 1; and
FIG. 4 is a block diagram showing the processing executed by the control device shown in FIG. 1.

### DETAILED DESCRIPTION OF EMBODIMENTS

Hereinafter, an embodiment of the present disclosure will be described with reference to drawings.

### Premise Configuration

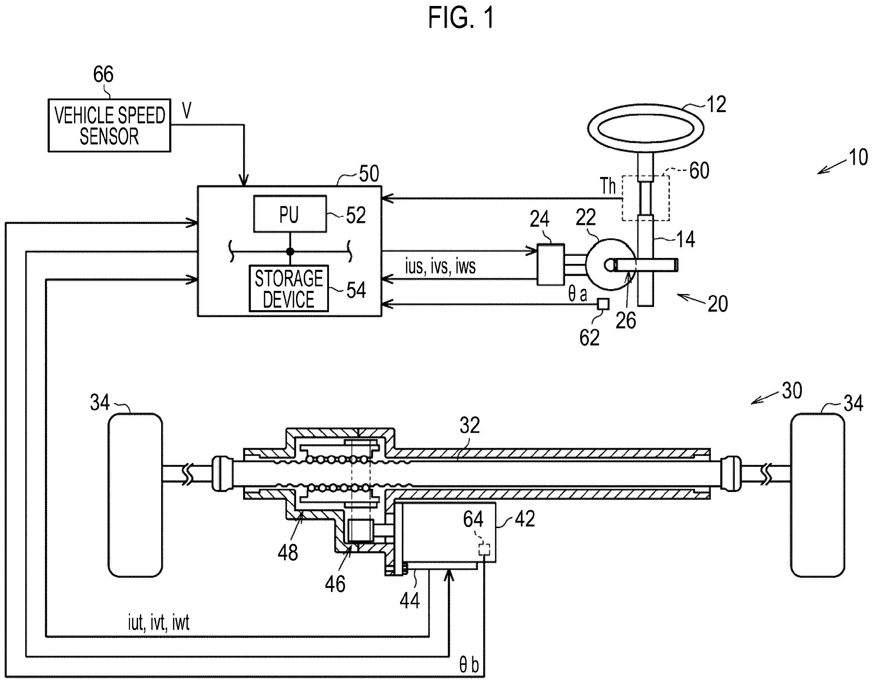

A steering device 10 of a vehicle shown in FIG. 1 is a steer-by-wire type device. The steering device 10 includes a steering wheel 12, a steering shaft 14, a reaction force actuator 20, and a turning actuator 30. The steering shaft 14 is connected to the steering wheel 12. The reaction force actuator 20 applies a force that resists a force with which the driver operates the steering wheel 12. The reaction force actuator 20 has a reaction force motor 22, an inverter for reaction force 24, and a reduction mechanism for reaction force 26. The reaction force motor 22 applies, to the steering wheel 12 via the steering shaft 14, a steering reaction force that is a force that resists the steering. The reaction force motor 22 is connected to the steering shaft 14 via the reduction mechanism for reaction force 26. As an example, a three-phase synchronous motor is employed as the reaction force motor 22. The reduction mechanism for reaction force 26 is, for example, a worm and wheel.

The turning actuator 30 has a use of causing turning wheels 34 to turn in response to steering intention of the driver indicated by the operation of the steering wheel 12 by the driver. The turning actuator 30 includes a rack shaft 32, a turning motor 42, an inverter for turning 44, a turning transmission mechanism 46, and a conversion mechanism 48. As an example, a three-phase surface permanent magnet synchronous motor (SPM) is employed as the turning motor 42. The turning transmission mechanism 46 is a belt transmission mechanism. A rotation power of the turning motor 42 is transmitted to the conversion mechanism 48 by the turning transmission mechanism 46. The conversion mechanism 48 converts the transmitted rotation power into a displacement power of the rack shaft 32 in an axial direction. The turning wheels 34 are turned by a displacement of the rack shaft 32 in the axial direction.

The steering control device 50 includes a PU 52 and a storage device 54. The PU 52 is a software processing device, such as a CPU, a GPU, or a TPU. The storage device 54 may be an electrically non-rewritable nonvolatile memory. The storage device 54 may be an electrically rewritable nonvolatile memory or a storage medium such as a disk medium. With execution of a program stored in the storage device 54 by the PU 52, the steering control device 50 controls a control target.

The control target of the steering control device 50 is the steering wheel 12 and the turning wheels 34. That is, the steering control device 50 controls the steering reaction force that resists the steering of the driver, which is a control amount of the steering wheel 12 as the control target. Further, the steering control device 50 controls a turning angle that is a control amount of the turning wheels 34 as the control target. The turning angle is a cut angle of a tire as the turning wheels 34.

The steering control device 50 refers to a steering torque Th detected by a torque sensor 60 to control the control amount. The steering torque Th is applied to the steering shaft 14 by the driver through the operation of the steering wheel 12. The steering control device 50 refers to a rotation angle θa, which is an angle of a rotation shaft of the reaction force motor 22, detected by a steering-side rotation angle sensor 62 to control the control amount. Further, the steering control device 50 refers to currents ius, ivs, and iws flowing through the reaction force motor 22 to control the control amount. The currents ius, ivs, and iws may be detected as voltage drop amounts of shunt resistors provided in respective legs of the inverter for reaction force 24, for example. The steering control device 50 refers to a rotation angle θb, which is an angle of a rotation shaft of the turning motor 42, detected by a turning-side rotation angle sensor 64 to control the control amount. Further, the steering control device 50 refers to currents iut, ivt, and iwt flowing through the turning motor 42 to control the control amount. The currents iut, ivt, and iwt may be detected as voltage drop amounts of shunt resistors provided in respective legs of the inverter for turning 44, for example. The steering control device 50 refers to a vehicle speed V detected by a vehicle speed sensor 66.

### Outline of Control

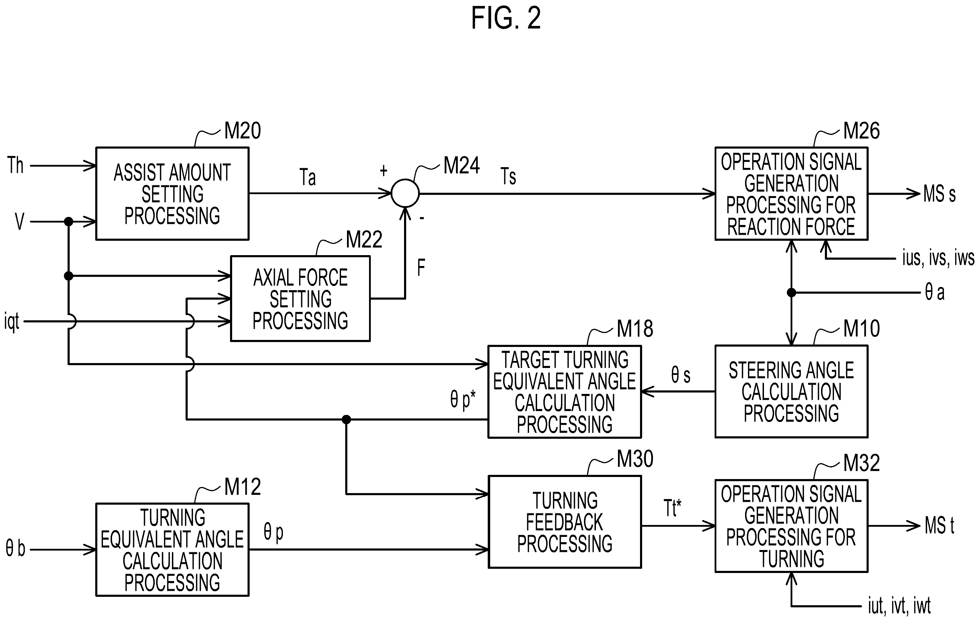

FIG. 2 shows processing executed by the steering control device 50. The processing shown in FIG. 2 is realized by the PU 52 repeatedly executing the program stored in the storage device 54, for example, at a predetermined cycle.

Steering angle calculation processing M10 includes processing of, for example, counting the number of rotations of the reaction force motor 22 from a steering neutral position, which is a position of the steering wheel 12 when the vehicle travels straight to convert the rotation angle θa into an integral angle including a range exceeding 360 degrees. The steering angle calculation processing M10 includes processing of multiplying the integral angle obtained by the conversion by a conversion coefficient based on a rotation speed ratio of the reduction mechanism for reaction force 26 to calculate a steering angle θs.

Turning equivalent angle calculation processing M12 includes processing of, for example, counting the number of rotations of the turning motor 42 from a rack neutral position, which is a position of the rack shaft 32 when the vehicle travels straight to convert the rotation angle θb into the integral angle including the range exceeding 360 degrees. The turning equivalent angle calculation processing M12 includes processing of multiplying the integral angle obtained by the conversion by a reduction ratio of the turning transmission mechanism 46 and a conversion coefficient according to a lead or the like of the conversion mechanism 48 to calculate a turning equivalent angle θp according to the turning angle of the turning wheels 34. The turning equivalent angle θp is a quantity in a proportional relationship with the turning angle. The turning equivalent angle θp is positive when the angle is on a right side of the rack neutral position, and negative when the angle is on a left side thereof, as an example.

In target turning equivalent angle calculation processing M18, the steering angle θs and the vehicle speed V are inputs, and a target turning equivalent angle θp* is an output. In the target turning equivalent angle calculation processing M18, for example, the target turning equivalent angle θp* may be calculated to a value having the same sign as the steering angle θs. In the target turning equivalent angle calculation processing M18, the target turning equivalent angle θp* may be changed according to the steering angle θs, under a condition that the target turning equivalent angle θp* when an absolute value of the steering angle θs is large is equal to or larger than the target turning equivalent angle θp* when the absolute value of the steering angle θs is small.

In the description of "changing B according to A under a condition that B when A is large is equal to or larger than B when A is small", when A is large and when A is small mean a relative size relationship when both are compared. For example, "when A is large" corresponds to "when A is a first value", and "when A is small" corresponds to "when A is a second value smaller than the first value". According to the above description, depending on the setting of the first value and the second value, B when A is the first value may be larger than B when A is the second value.

In assist amount setting processing M20, the steering torque Th and the vehicle speed V are inputs, and an assist amount Ta is an output. The assist amount Ta is an amount in the same direction as a steering direction of the driver. A magnitude of the assist amount Ta is set to a large value when a force that assists the steering by the driver is increased.

In axial force setting processing M22, the vehicle speed V, a q-axis current iqt of the turning motor 42, and the target turning equivalent angle θp* are inputs, and an axial force F is an output. The axial force F is a value that expresses a force acting on the rack shaft 32 through the turning wheels 34 by control. However, the axial force F is not necessarily intended to estimate the force acting on the rack shaft 32 with high accuracy. The axial force F may be, for example, a virtually determined force that acts on the rack shaft 32. The axial force F is converted into the torque added to the steering shaft 14. That is, the axial force F is converted into the torque added to the steering shaft 14 when power transmission between the turning wheels 34 and the steering shaft 14 is assumed to be in a possible state. The axial force F is a quantity that acts in a direction opposite to the steering direction of the driver. The q-axis current iqt is calculated by the PU 52 in accordance with the turning equivalent angle θp and the currents iut, ivt, and iwt.

In subtraction processing M24, a value obtained by subtracting the axial force F from the assist amount Ta is substituted into a target reaction force torque Ts. The target reaction force torque Ts is a target value of the torque added by the reaction force motor 22 to the steering shaft 14.

In operation signal generation processing for reaction force M26, an operation signal MSs for the inverter for reaction force 24 is generated to control the torque of the reaction force motor 22 such that the torque added to the steering shaft 14 is the target reaction force torque Ts. Specifically, the operation signal generation processing for reaction force M26 includes processing of converting the target reaction force torque Ts into a target torque of the reaction force motor 22. Further, the operation signal generation processing for reaction force M26 includes processing of calculating the operation signal MSs for the inverter for reaction force 24 such that the current flowing through the reaction force motor 22 approaches a current determined from the target torque by feedback control of the current. The operation signal MSs is for each of six switching elements of the inverter for reaction force 24 in practice. The target reaction force torque Ts is usually a quantity having a sign opposite to the assist amount Ta. This is because an absolute value of the axial force F is usually larger than an absolute value of the assist amount Ta.

In turning feedback processing M30, an operation amount of feedback control in which the turning equivalent angle θp is the control amount and the target turning equivalent angle θp* is a target value of the control amount is substituted into a target turning torque Tt*. The target turning torque Tt* has a constant ratio to the torque of the turning motor 42.

In operation signal generation processing for turning M32, an operation signal MSt for the inverter for turning 44 is generated to control the torque of the turning motor 42 such that the torque of the turning motor 42 is a value having a constant ratio to the target turning torque Tt*. Specifically, the operation signal generation processing for turning M32 includes processing of converting the target turning torque Tt* into a target torque of the turning motor 42. Further, the operation signal generation processing for turning M32 includes processing of calculating the operation signal MSt for the inverter for turning 44 such that the current flowing through the turning motor 42 approaches a current determined from the target torque by feedback control of the current. The operation signal MSt is for each of six switching elements of the inverter for turning 44 in practice.

### Assist Amount Setting Processing

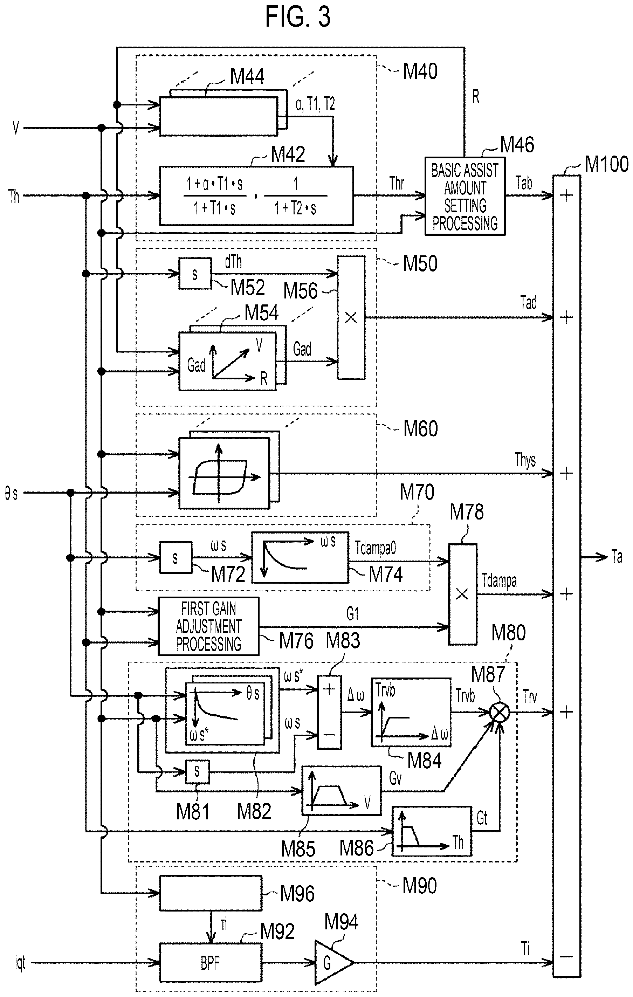

FIG. 3 shows details of the assist amount setting processing M20. In phase delay compensation processing M40, a phase of the steering torque Th is delayed. In the phase delay compensation processing M40, for example, phase compensation for the steering torque Th may be performed to adjust frequency characteristics of a phase difference between both sides of a torsion bar included in the torque sensor 60. The steering torque Th after the phase compensation, which is an output value of the phase delay compensation processing M40, is a steering torque Thr. The phase delay compensation processing M40 includes filter processing M42 and filter coefficient setting processing M44.

The filter processing M42 includes a phase delay filter and a low-pass filter. A transfer function of the phase delay filter is "(1 + α·T1·s)/(1 + T1·s)". The transfer function of the low-pass filter is "1/(1 + T2-s)". A value obtained by performing processing by the phase delay filter and the low-pass filter on the steering torque Th is the steering torque Thr.

In the filter coefficient setting processing M44, filter coefficients α, T1 of the phase delay filter and a filter coefficient T2 of the low-pass filter are set. In the filter coefficient setting processing M44, an assist gradient R described below and the vehicle speed V are inputs, and the filter coefficients α, T1, and T2 are outputs.

In basic assist amount setting processing M46, the steering torque Thr and the vehicle speed V are inputs, and a basic assist amount Tab is an output. In the basic assist amount setting processing M46, the basic assist amount Tab is set to a value having a positive correlation with the steering torque Thr. The basic assist amount setting processing M46 may be processing of, for example, performing map calculation of the basic assist amount Tab by the PU 52 in a state where map data is stored in the storage device 54 in advance. In the map data, the steering torque Thr and the vehicle speed V are input variables, and the basic assist amount Tab is an output variable.

The map data is a set of discrete values of the input variables and a value of the output variable corresponding to each of the values of the input variables. Further, the map calculation may be processing of setting, when the value of the input variable matches any one of the values of the input variables of the map data, the corresponding value of the output variable of the map data as a calculation result. Further, the map calculation may be processing of setting, when the value of the input variable does not match any one of the values of the input variables of the map data, a value obtained by interpolating a plurality of values of the output variable included in the map data as the calculation result. Further, instead of the above, the map calculation may be processing of setting, when the value of the input variable does not match any one of the values of the input variables of the map data, a value of the output variable of the map data corresponding to a closest value among a plurality of values of the input variable included in the map data as the calculation result.

The basic assist amount setting processing M46 includes processing of calculating and outputting the assist gradient R. The assist gradient R indicates a ratio of a change in the basic assist amount Tab to a change in the steering torque Thr.

In phase advance compensation processing M50, a phase of the assist amount Ta advances. The phase advance compensation processing M50 may be processing of, for example, performing the phase compensation on the assist amount Ta to adjust a response delay of a change in the steering wheel 12 to the change in the steering torque Th. The phase advance compensation processing M50 includes a differential calculation M52, gain setting processing M54, and multiplication processing M56.

In the differential calculation M52, a first-order time differential value dTh of the steering torque Th is calculated. In the gain setting processing M54, the assist gradient R and the vehicle speed V are inputs, and a gain Gad is an output. In the gain setting processing M54, the map calculation may be performed on the gain Gad in a state where the map data is stored in the storage device 54 in advance. In the map data, the assist gradient R and the vehicle speed V are input variables, and the gain Gad is an output variable.

In the multiplication processing M56, the time differential value dTh is multiplied by the gain Gad. A product of the time differential value dTh and the gain Gad is an advance compensation amount Tad as an output of the phase advance compensation processing M50.

In hysteresis processing M60, a hysteresis correction amount Thys is calculated. The hysteresis correction amount Thys is an amount for setting the assist amount Ta to different values with turning back and forth of the steering wheel 12. In the hysteresis processing M60, the steering angle θs and the vehicle speed V are inputs, and the hysteresis correction amount Thys is an output. In the hysteresis processing M60, the PU 52 performs the map calculation on the hysteresis correction amount Thys in a state where the map data is stored in the storage device 54 in advance, as an example. In the map data, the steering angle θs and the vehicle speed V are input variables, and the hysteresis correction amount Thys is an output variable.

In first damping processing M70, a first damping correction amount Tdampa0 having a negative correlation with a rotation speed of the steering wheel 12 is calculated. The first damping correction amount Tdampa0 is a correction amount for applying a viscous resistance to the operation of the steering wheel 12 by control. The first damping processing M70 includes a differential calculation M72 and first correction amount setting processing M74.

In the differential calculation M72, a first-order time differential value of the steering angle θs is calculated. The time differential value is a steering speed ωs. In first correction amount setting processing M74, the first damping correction amount Tdampa0 having a negative correlation with the steering speed ωs is calculated. The first damping correction amount Tdampa0 has a dimension of torque. In the first correction amount setting processing M74, the map calculation may be performed on the first damping correction amount Tdampa0 by the PU 52 in a state where the map data is stored in the storage device 54 in advance. In the map data, the steering speed ωs is an input variable, and the first damping correction amount Tdampa0 is an output variable.

In first gain adjustment processing M76, the steering torque Th and the vehicle speed V are inputs, and a first gain G1 is an output. In the first gain adjustment processing M76, the PU 52 performs the map calculation on the first gain G1 in a state where the map data is stored in the storage device 54 in advance, as an example. In the map data, the steering torque Th and the vehicle speed V are input variables, and the first gain G1 is an output variable.

In multiplication processing M78, a value obtained by multiplying the first damping correction amount Tdampa0 by the first gain G1 is substituted into a first damping correction amount Tdampa. In steering return processing M80, a return correction amount Trv is calculated. The return correction amount Trv is a correction amount for returning the steering wheel 12 to the neutral position. The return correction amount Trv has a dimension of torque. The steering return processing M80 includes a differential calculation M81, target steering speed setting processing M82, deviation calculation processing M83, base compensation amount calculation processing M84, speed gain setting processing M85, torque gain setting processing M86, and multiplication processing M87.

In the differential calculation M81, the steering angle θs is an input, and the steering speed ωs, which is the first-order time differential value of the steering angle θs, is an output. In the target steering speed setting processing M82, the steering angle θs and the vehicle speed V are inputs, and a target steering speed ωs* is an output. In the target steering speed setting processing M82, the map calculation may be performed on the target steering speed ωs* by the PU 52 in a state where the map data is stored in the storage device 54 in advance. In the map data, the steering angle θs and the vehicle speed V are input variables, and the target steering speed ωs* is an output variable. In the deviation calculation processing M83, a deviation Δω between the target steering speed ωs* and the steering speed ωs is calculated. In the base compensation amount calculation processing M84, a base compensation amount Trvb is calculated with the deviation Δω as an input. In the speed gain setting processing M85, the vehicle speed V is an input, and a speed gain Gv is an output. In the speed gain setting processing M85, the map calculation may be performed on the speed gain Gv by the PU 52 in a state where the map data is stored in the storage device 54 in advance. In the map data, the vehicle speed V is an input variable, and the speed gain Gv is an output variable. In the torque gain setting processing M86, the steering torque Th is an input, and a torque gain Gt is an output. In the torque gain setting processing M86, the map calculation may be performed on the torque gain Gt by the PU 52 in a state where the map data is stored in the storage device 54 in advance. In the map data, the steering torque Th is an input variable, and the torque gain Gt is an output variable. In the multiplication processing M87, a value obtained by multiplying the base compensation amount Trvb by the speed gain Gv and the torque gain Gt is substituted into the return correction amount Trv.

In road information processing M90, information related to a road surface reaction force, which is a force added from a road surface to the turning wheels 34, is superimposed on the steering wheel 12. The road information processing M90 includes a band-pass filter M92, gain multiplication processing M94, and filter coefficient setting processing M96. The q-axis current iqt is input to the band-pass filter M92. The q-axis current iqt is input to the band-pass filter M92 as a variable including a vibration component of the turning wheels 34 due to the road surface reaction force. In the band-pass filter M92, a signal in a vibration frequency band caused by unevenness of the road surface is selectively extracted. In the gain multiplication processing M94, a value obtained by multiplying an output value of the band-pass filter M92 by a gain G is substituted into a road surface information torque Ti. In the filter coefficient setting processing M96, the vehicle speed V is an input, and a filter coefficient τi of the band-pass filter M92 is an output. The filter coefficient τi may be a variable or an attenuation coefficient for defining a frequency band that the band-pass filter M92 passes. The variable for defining the frequency band may be, for example, a center frequency. Although the filter coefficient τi is described as one variable, a plurality of filter coefficients may be used in practice.

In synthesis processing M100, the advance compensation amount Tad, the hysteresis correction amount Thys, the first damping correction amount Tdampa, and the return correction amount Trv are added to the basic assist amount Tab, and the road surface information torque Ti is subtracted from the basic assist amount Tab. A value calculated in this manner is the assist amount Ta.

### Axial Force Setting Processing

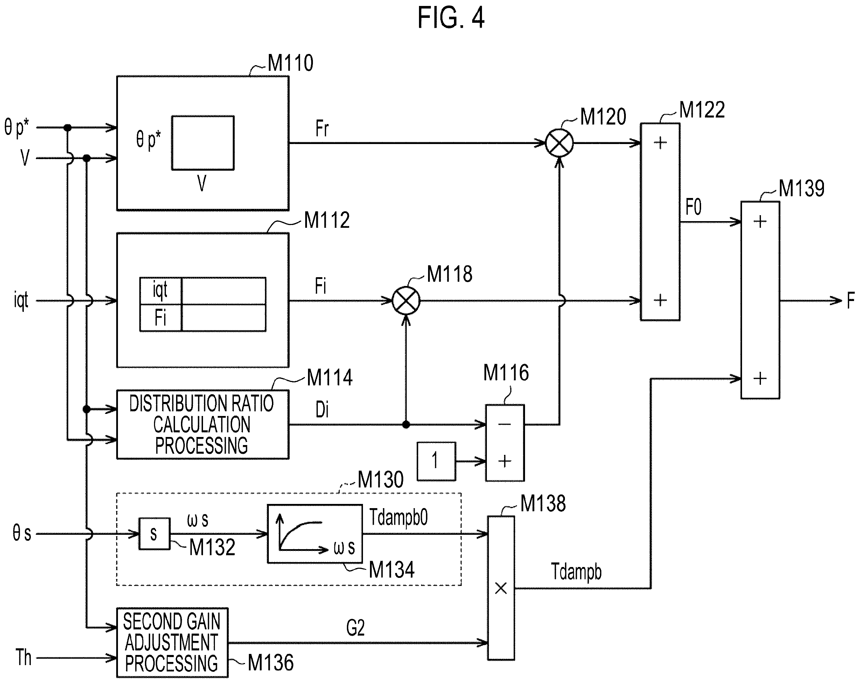

FIG. 4 shows details of the axial force setting processing M22. In angle axial force setting processing M110, the target turning equivalent angle θp* and the vehicle speed V are inputs, and an angle axial force Fr is an output. The angle axial force Fr is an estimated value of an axial force defined by a vehicle model or the like set randomly. The angle axial force Fr is calculated as the axial force in which road surface information is not reflected. The road surface information is information on a minute unevenness that does not affect behavior of the vehicle in a lateral direction, a step that affects the behavior of the vehicle in the lateral direction, or the like. In the angle axial force setting processing M110, the target turning equivalent angle θp* may be calculated to a value having the same sign as the angle axial force Fr. In the angle axial force setting processing M110, the angle axial force Fr may be changed under a condition that the target turning equivalent angle θp* according to the steering angle θs, under a condition that an absolute value of the angle axial force Fr when an absolute value of the target turning equivalent angle θp* is large is equal to or larger than the absolute value of the angle axial force Fr when the absolute value of the target turning equivalent angle θp* is small. Further, for example, in the angle axial force setting processing M110, the angle axial force Fr may be changed according to the vehicle speed V, under a condition that the absolute value of the angle axial force Fr when the vehicle speed V is large is equal to or larger than the absolute value of the angle axial force Fr when the vehicle speed V is small. In the angle axial force setting processing M110, the PU 52 performs the map calculation on the angle axial force Fr in a state where the map data is stored in the storage device 54 in advance. In the map data, the target turning equivalent angle θp* and the vehicle speed V are input variables, and the angle axial force Fr is an output variable.

In current axial force setting processing M112, the q-axis current iqt of the turning motor 42 is an input, and a current axial force Fi is an output. The current axial force Fi is an actual axial force acting on the rack shaft 32 that operates to turn the turning wheels 34, that is, an estimated value of the actual axial force transmitted to the rack shaft 32. The current axial force Fi is calculated as the axial force in which the road surface information is reflected. For example, in the current axial force setting processing M112, the current axial force Fi is calculated assuming that a torque added to the rack shaft 32 by the turning motor 42 and a torque according to the force added to the rack shaft 32 through the turning wheels 34 are balanced. In the current axial force setting processing M112, the current axial force Fi is changed, under a condition that an absolute value of the current axial force Fi when an absolute value of the q-axis current iqt is large is equal to or larger than the absolute value of the current axial force Fi when the absolute value of the q-axis current iqt is small.

Specifically, in the current axial force setting processing M112, the PU 52 performs the map calculation on the current axial force Fi in a state where the map data is stored in the storage device 54 in advance. In the map data, the q-axis current iqt is an input variable, and the current axial force Fi is an output variable.

In distribution ratio calculation processing M114, the vehicle speed V and the target turning equivalent angle θp* are inputs, and a ratio Di is an output. The ratio Di is a ratio of the current axial force Fi to a sum of the angle axial force Fr and the current axial force Fi. The ratio Di has a value of zero or more and one or less. The distribution ratio calculation processing M114 may be processing of performing the map calculation on the ratio Di by the PU 52 in a state where the map data is stored in the storage device 54 in advance, for example. In the map data, the vehicle speed V and the target turning equivalent angle θp* are input variables, and the ratio Di is an output variable.

In second distribution ratio calculation processing M116, the ratio Di is subtracted from "1" to calculate a second ratio "1 - Di". The second ratio is a ratio of the angle axial force Fr to the sum of the angle axial force Fr and the current axial force Fi.

In first ratio multiplication processing M118, the current axial force Fi is multiplied by the ratio Di. In second ratio multiplication processing M120, the angle axial force Fr is multiplied by the second ratio. In addition processing M122, a value obtained by adding an output value of the first ratio multiplication processing M118 and an output value of the second ratio multiplication processing M120 is substituted into an axial force F0. That is, the axial force F0 is a weighted average processing value of the angle axial force Fr and the current axial force Fi.

In second damping processing M130, a second damping correction amount Tdampb0 having a positive correlation with the rotation speed of the steering wheel 12 is calculated. The second damping correction amount Tdampb0 is a correction amount for compensating for a phase delay of the axial force F0 by control. The second damping correction amount Tdampb0 may be a correction amount for reducing a damping component caused by the current axial force Fi or the like. The second damping processing M130 includes a differential calculation M132 and second correction amount setting processing M134.

In the differential calculation M132, the first-order time differential value of the steering angle θs is calculated. The time differential value is the steering speed ωs. In the second correction amount setting processing M134, the second damping correction amount Tdampb0 having a positive correlation with the steering speed ωs is calculated. The second damping correction amount Tdampb0 has a dimension of torque. In the second correction amount setting processing M134, the map calculation may be performed on the second damping correction amount Tdampb0 by the PU 52 in a state where the map data is stored in the storage device 54 in advance. In the map data, the steering speed ωs is an input variable, and the second damping correction amount Tdampb0 is an output variable.

In second gain adjustment processing M136, the steering torque Th and the vehicle speed V are inputs, and a second gain G2 is an output. In the second gain adjustment processing M136, the PU 52 performs the map calculation on the second gain G2 in a state where the map data is stored in the storage device 54 in advance, as an example. In the map data, the steering torque Th and the vehicle speed V are input variables, and the second gain G2 is an output variable.

In multiplication processing M138, a value obtained by multiplying the second damping correction amount Tdampb0 by the second gain G2 is substituted into a second damping correction amount Tdampb. In addition processing M139, a value obtained by adding the second damping correction amount Tdampb to the axial force F0 is substituted into the axial force F.

### Action and Effect of Present Embodiment

The PU 52 subtracts the axial force F from the assist amount Ta to set the target reaction force torque Ts. The torque of the reaction force motor 22 is controlled according to the target reaction force torque Ts.

Here, in a situation or the like in which the correction amounts of the compensation processing, such as the first damping correction amount Tdampa and the advance compensation amount Tad, which are the variables used to calculate the assist amount Ta, are not reflected, the stability is reduced. Such a situation occurs, for example, when the torque input to the steering wheel 12 is excessively large. That is, for example, when the above torque exceeds a range detectable by the torque sensor 60, the time differential value dTh is zero. Therefore, the advance compensation amount Tad cannot be set to an appropriate value. Further, for example, when the basic assist amount Tab is excessively large, a magnitude of the axial force F is relatively small, and the steering of the steering wheel 12 may be unstable. In particular, when a lower limit guard processing is performed on a magnitude of the reaction force that resists the operation of the steering wheel 12 by the driver, the correction amount of the compensation processing may not be reflected by a lower limit guard value.

The PU 52 adds the second damping correction amount Tdampb to the axial force F0. Accordingly, for example, when the assist amount Ta is excessively large, with increased correction for the axial force F, the magnitude of the reaction force that resists the operation of the steering wheel 12 by the driver is suppressed from being excessively small. Therefore, the reduction in the stability of the steering device 10 can be suppressed.

According to the present embodiment described above, the following actions and effects can be further obtained. The second damping processing M130 is newly provided to the axial force setting processing M22. Accordingly, the processing of causing the phase to advance can be realized.

In addition to the first damping processing M70 provided in the assist amount setting processing M20, the second damping processing M130 is provided in the axial force setting processing M22. Accordingly, the first damping correction amount Tdampa and the second damping correction amount Tdampb can be set according to a difference in each purpose, and thus the adaptation is facilitated.

The PU 52 set the second gain G2 according to the steering torque Th. The steering torque Th is, first, a variable indicating whether or not a detection target is within a range detectable by the torque sensor 60. Second, the steering torque Th is a torque correlation variable having a positive correlation with the torque of the reaction force motor 22. Therefore, a magnitude of the second damping correction amount Tdampb can be adjusted depending on whether or not the detection target is within the range detectable by the torque sensor 60 and depending on whether or not the target reaction force torque Ts has a magnitude that can be realized by the reaction force motor 22.

The PU 52 set the second gain G2 according to the vehicle speed V. Accordingly, the second gain G2 can be set more appropriately according to a situation in which the stability is likely to be reduced, as compared with a case where the second gain G2 is set without referring to the vehicle speed V.

The degree to which the first damping correction amount Tdampa0 output from the first damping processing M70, which is included in the assist amount setting processing M20, is reflected in the assist amount Ta is adjusted by the first gain G1. Accordingly, the first damping correction amount Tdampa, which is obtained by multiplying the first damping correction amount Tdampa0 by the first gain G1, can be set to an appropriate magnitude in suppressing the reduction in the stability of the steering device 10.

The PU 52 sets the first gain G1 according to the vehicle speed V. Accordingly, the first gain G1 can be set more appropriately according to the situation in which the stability is likely to be reduced, as compared with a case where the first gain G1 is set without referring to the vehicle speed V.

### Correspondence

The correspondence between the matters in the above embodiment and the matters described in the column of "means for solving the problem" is as follows. In the following, the correspondence is shown for each number of the solution means described in the column of "means for solving the problem". [1 to 3] The reaction force application processing corresponds to the subtraction processing M24 and the operation signal generation processing for reaction force M26. The torque correlation coefficient corresponds to the steering torque Th. [4 to 5] The compensation processing corresponds to the phase delay compensation processing M40, the phase advance compensation processing M50, and the first damping processing M70. The compensation gain adjustment processing corresponds to the second gain adjustment processing M136.

### Other Embodiments

The embodiment can be implemented with the following modifications. The embodiment and the following modification examples can be implemented in combination with each other within a technically consistent range.

### Torque Correlation Coefficient

The torque correlation coefficient is not necessarily the steering torque Th. The torque correlation coefficient may be, for example, the torque of the reaction force motor 22 calculated from the current flowing through the reaction force motor 22. Further, for example, when processing of performing the feedback control on the steering torque Th to a target value is executed, the torque correlation coefficient may be the same target value. Further, for example, the torque correlation coefficient may be the target reaction force torque Ts.

### Second Gain Adjustment Processing

The input of the second gain adjustment processing is not necessarily the torque correlation coefficient and the vehicle speed V. The input of the second gain adjustment processing may be, for example, solely the torque correlation coefficient.

### Compensation Gain Adjustment Processing

The gain adjustment target by the compensation gain adjustment processing is not limited to the second damping correction amount Tdampb0. The gain adjustment target by the compensation gain adjustment processing may be, for example, the advance compensation amount Tad. Further, for example, the gain adjustment target by the compensation gain adjustment processing may be both the second damping correction amount Tdampb0 and the advance compensation amount Tad.

The input of the compensation gain adjustment processing is not necessarily the torque correlation coefficient and the vehicle speed V. The input of the compensation gain adjustment processing may be, for example, solely the torque correlation coefficient.

### Phase Advance Compensation Processing

In FIG. 3, the input of the gain setting processing M54 is the vehicle speed V and the assist gradient R, but is not limited thereto. For example, the input of the gain setting processing M54 may be solely the assist gradient R. Further, for example, the input of the gain setting processing M54 may be solely the vehicle speed V.

A low-pass filter may be provided between the differential calculation M52 and the multiplication processing M56. In the multiplication processing M56, instead of the multiplication of the time differential value dTh by the gain Gad, the map data may be provided in which the time differential value dTh is an input variable and the advance compensation amount Tad is an output variable.

The phase advance compensation processing does not have to include the processing of calculating the time differential value dTh. For example, instead of the calculation of the time differential value dTh, processing in which the input of the phase advance compensation processing is the steering torque Th may be included.

### First Damping Processing

The first correction amount setting processing M74 is not limited to the processing of calculating the first damping correction amount Tdampa0 having a negative correlation with the steering speed ωs. In the first correction amount setting processing M74, the first damping correction amount Tdampa0 may be set to a value having a positive correlation with the steering speed ωs, for example, depending on a value of a predetermined variable, such as the target reaction force torque Ts.

### Axial Force Setting Processing

The angle axial force setting processing M110 is not necessarily the processing of performing the map calculation on the angle axial force Fr. For example, in the angle axial force setting processing M110, a value obtained by multiplying the target turning equivalent angle θp* by a gain may be substituted into the angle axial force Fr. The gain may be variable according to the vehicle speed V.

The input of the angle axial force setting processing M110 is not necessarily the target turning equivalent angle θp* and the vehicle speed V. For example, the input of the angle axial force setting processing M110 may not include the vehicle speed V. Further, for example, an angle variable of a steering system as the input variable of the angle axial force setting processing M110 is not limited to the target turning equivalent angle θp*. For example, the angle variable of the steering system may be the turning equivalent angle θp. Further, for example, the angle variable of the steering system may be the steering angle θs.

The current axial force setting processing M112 is not limited to the processing of performing the map calculation on the current axial force Fi. For example, in the current axial force setting processing M112, a value obtained by multiplying the q-axis current iqt by a gain may be substituted into the current axial force Fi.

The input of the current axial force setting processing M112 is not limited to the q-axis current iqt. For example, the input of the current axial force setting processing M112 may be the q-axis current iqt and the vehicle speed V. For example, the input of the current axial force setting processing M112 may include the angle variables of the steering system, such as the target turning equivalent angle θp*, the turning equivalent angle θp, and the steering angle θs.

The input of the distribution ratio calculation processing M114 is not necessarily the target turning equivalent angle θp* and the vehicle speed V. For example, the input of the distribution ratio calculation processing M114 may not include the vehicle speed V. Further, for example, the angle variable of the steering system as the input variable of the distribution ratio calculation processing M114 is not limited to the target turning equivalent angle θp*. For example, the angle variable of the steering system may be the turning equivalent angle θp. Further, for example, the angle variable of the steering system may be the steering angle θs.

The axial force setting processing does not have to include both the angle axial force setting processing M110 and the current axial force setting processing M112. For example, solely any one of the angle axial force setting processing M110 and the current axial force setting processing M112 may be included.

### Steering Control Device

The steering control device is not limited to the device that executes software processing. For example, a dedicated hardware circuit, such as an ASIC, that executes at least a part of the processing executed in the above embodiment may be provided. That is, the steering control device may include a processing circuit including any configuration of the following (a) to (c). (a) A processing circuit including a processing device that executes all of the pieces of processing in accordance with a program and a program storage device, such as a storage device, that stores the program. (b) A processing circuit including a processing device that executes a part of the pieces of processing in accordance with a program, a program storage device, and a dedicated hardware circuit that executes the remaining processing. (c) A processing circuit including a dedicated hardware circuit that executes all of the pieces of processing. Here, a plurality of software execution devices including the processing device and the program storage device may be provided. Further, a plurality of dedicated hardware circuits may be provided.

### Others

The turning motor 42 is not necessarily a synchronous machine. For example, a generator may be used.

In each of the above embodiments, the steering device 10 has a linkless structure in which the steering wheel 12 and the turning wheels 34 are mechanically always separated from each other, but is not limited thereto. A structure may be used in which the steering wheel 12 and the turning wheels 34 are mechanically separable from each other by a clutch.

## Claims

1. A steering control device (50) **characterized by** comprising a software processing device, wherein:
the software processing device sets a steering system as a control target;
the steering system includes
a reaction force motor (22) configured to apply a steering reaction force to a steering shaft (14), and
a turning motor (42) configured to cause turning wheels (34) to turn in a state where power transmission from the steering shaft (14) is cut off;
the software processing device is configured to execute assist amount setting processing, axial force setting processing, and reaction force application processing;
in the assist amount setting processing, an assist amount is set while an output value of first damping processing is used, in which the assist amount is an amount of assisting a driver in rotating the steering shaft (14);
in the axial force setting processing, an axial force is set while an output value of second damping processing is used, in which the axial force is a force that resists a rotation operation of the steering shaft (14) by the driver;
in the reaction force application processing, a value obtained by subtracting the axial force from the assist amount is an input and the reaction force motor (22) is operated;
in the first damping processing, a first damping correction amount having a correlation with a steering angular velocity is output; and
in the second damping processing, a second damping correction amount having a positive correlation with the steering angular velocity is output.

2. The steering control device (50) according to claim 1, **characterized in that**:
the software processing device is configured to execute second gain adjustment processing of adjusting, according to a value of a torque correlation variable, a second gain that is a gain of the second damping processing; and
the torque correlation variable is a variable having a correlation with a torque of the reaction force motor (22).

3. The steering control device (50) according to claim 2, **characterized in that** in the second gain adjustment processing, the second gain is adjusted according to a vehicle speed in addition to the value of the torque correlation variable.

4. The steering control device (50) according to claim 1, **characterized in that**:
in the assist amount setting processing, the assist amount is set while output values of a plurality of pieces of compensation processing including the first damping processing are used;
the software processing device is configured to execute compensation gain adjustment processing of adjusting, according to a value of a torque correlation variable, a compensation gain that is a gain of at least one of the plurality of pieces of compensation processing; and
the torque correlation variable is a variable having a correlation with a torque of the reaction force motor (22).

5. The steering control device (50) according to claim 4, **characterized in that** in the compensation gain adjustment processing, the compensation gain is adjusted according to a vehicle speed in addition to the value of the torque correlation variable.

6. The steering control device (50) according to claim 2, **characterized in that** the torque correlation variable is a steering torque.
